# FASCICULE DE BREVET EUROPEEN

(11) **EP 3 013 683 B1**
(45) Date de publication et mention de la délivrance du brevet: **01.08.2018**
(21) Numéro de dépôt: 14739885.3
(22) Date de dépôt: 18.06.2014
(51) Int. Cl.: B64C 1/14, G02B 5/30, E06B 9/24

(54) **SYSTÈME À PANNEAU TRANSLUCIDE**
SYSTEM MIT DURCHSICHTIGEN PLATTEN
TRANSLUCENT PANEL SYSTEM

(30) Priorité: 28.06.2013 FR 1356294
(43) Date de publication de la demande: 04.05.2016
(73) Titulaire: Vision Systems, 69530 Brignais (FR)
(72) Inventeur: COSTA, Laurent, F-69000 Valence (FR); FIGURA, Georges, F-69530 Brignais (FR)
(74) Mandataire: Verriest, Philippe
(86) Numéro de dépôt international: PCT/FR2014/051511
(87) Numéro de publication internationale: WO 2014/207349

(56) Documents cités:
- WO-A1-2007/085721
- AT-B- 409 902
- US-A- 3 669 526
- US-A1- 2007 186 477
- US-A1- 2008 158 448

## Description

La présente invention concerne le domaine des hublots, ou vitrages ou parois translucides comprenant un film polarisable agencé pour faire varier le degré d'occultation de la lumière traversant ledit hublot. AT409902 et US2008/0158448 décrivent un système à panneau translucide.

Il est connu d'utiliser un système à panneau translucide compris dans le hublot. Le système à panneau translucide comprend un film polarisable disposé sur une couche interne du panneau translucide, le film polarisable étant agencé pour faire varier le degré d'opacité du hublot.

Le degré d'opacité du hublot peut varier de la transparence à l'opacité totale. Pour ce faire, le film polarisable comprend deux couches conductrices polarisées entre lesquelles est disposée une couche de matériau polarisable. Cette couche de matériau polarisable est soumise à une différence de potentiel par les couches conductrices. La variation de la tension de l'alimentation électrique engendre la variation du degré d'opacité ou d'assombrissement. Ainsi il est possible de régler l'intensité lumineuse traversant le hublot. Ce système donne satisfaction en ce que le degré d'opacité du hublot peut être ajusté en fonction de la luminosité extérieure.

Toutefois, un tel système nécessite un agencement d'alimentation électrique et de réglage du degré d'opacité. L'alimentation électrique du hublot dépend soit d'une alimentation externe de type réseau électrique soit à une réserve d'énergie de type batterie.

En ce sens, l'autonomie du système à panneau est dépendante d'une source d'énergie externe épuisable ou susceptible de ne plus fournir d'énergie en cas de panne.

La présente invention vise à résoudre tout ou partie des inconvénients mentionnés ci-dessus.

Dans le présent texte, les verbes « raccorder », « connecter », « relier », « alimenter » et leurs dérivés se rapportent à une communication électrique entre deux composants distincts.

A cet effet, la présente invention concerne un système à panneau translucide comprenant un panneau. Le panneau comprend une couche translucide pourvue d'un écran transparent sur lequel est rapporté un dispositif à capteurs d'énergie lumineuse d'une source de lumière, de façon à permettre la vision à travers la couche translucide, le panneau comprenant en outre une couche interne pourvu d'un film polarisable destiné à modifier le degré d'opacité du panneau, la couche translucide étant en regard de la couche interne.

Le système à panneau comprend un élément de transmission et/ou de stockage d'énergie en provenance du dispositif à capteurs.

Le système à panneau comprend un agencement d'alimentation électrique et de réglage du degré d'opacité du film polarisable, l'agencement d'alimentation et de réglage étant au moins partiellement alimenté par l'élément de transmission et/ou de stockage de l'énergie lumineuse.

Grâce aux dispositions selon l'invention, il est possible de constituer un ensemble dans lequel l'alimentation électrique du système est assurée au moins en partie par le dispositif à capteurs d'énergie lumineuse.

Selon un autre aspect de l'invention, l'élément de transmission et/ou de stockage est agencé pour transférer l'énergie transmise ou stockée à un élément extérieur apte à la consommer.

De préférence, l'élément extérieur est un circuit électrique distinct du système à panneau.

Selon un aspect de l'invention, le dispositif à capteurs d'énergie lumineuse comprend des capteurs solaires thermiques et/ou photovoltaïques.

Selon un aspect de l'invention, les capteurs solaires photovoltaïques sont rapportés sur l'écran transparent et sont agencés pour que la couche transparente présente une transparence supérieure à 60%.

De préférence, les capteurs solaires photovoltaïques sont agencés pour que la couche transparente présente une transparence comprise entre 60% et 90%.

Selon un aspect de l'invention, les capteurs solaires photovoltaïques sont rapportés sur l'écran transparent et sont agencés pour obtenir un rendement de conversion de l'énergie solaire en énergie électrique supérieur à 4%. De préférence, le rendement de conversion est compris entre 4 et 40%.

Selon un autre aspect de l'invention, un retrait de matière sélectif des capteurs photovoltaïques rapportés sur l'écran transparent est opéré pour la réalisation de la couche translucide.

Le retrait de matière sélectif permet une augmentation de la transparence de la couche translucide.

Selon un aspect de l'invention, l'élément de transmission et/ou de stockage de l'énergie lumineuse comprend une batterie apte à stocker l'énergie en provenance du dispositif à capteurs.

Selon un aspect de l'invention, le film polarisable est opaque en absence d'alimentation électrique.

De préférence, l'opacité du film polarisable diminue avec l'augmentation de la tension d'alimentation électrique.

Selon un aspect de l'invention, le film polarisable est de type « suspended particule device ». Un film polarisable de type « suspended particule device » présente une réactivité aux variations d'alimentation électrique, lui conférant une adaptation rapide au changement de luminosité.

Le film polarisable étant opaque en l'absence d'alimentation électrique, l'utilisation de batteries présente un avantage certain. En période de forte luminosité, l'alimentation électrique nécessaire au film polarisable est faible tandis que le dispositif à capteurs d'énergie récupère une énergie importante. Ainsi il est possible de charger les batteries.

A l'inverse, en période de faible luminosité, les besoins en alimentation électrique sont plus importants et l'énergie récupérée plus faible. L'énergie stockée dans les batteries peut alors être utilisée pour l'alimentation électrique.

Selon un aspect de l'invention, l'agencement d'alimentation et de réglage est alimenté par l'élément de transmission et/ou de stockage d'énergie.

Cette disposition permet un fonctionnement autonome du système à panneau, c'est-à-dire sans apport d'énergie en provenance du circuit d'alimentation électrique.

De préférence, l'agencement d'alimentation et de réglage est alimenté par les batteries.

Le film polarisable étant plus opaque en l'absence d'alimentation électrique et moins opaque en présence d'alimentation électrique, l'utilisation de batteries permet de stocker de l'énergie en période de forte luminosité, l'alimentation électrique nécessaire au film polarisable étant faible. A l'inverse, en période de faible luminosité, les besoins en alimentation électrique sont plus importants et l'énergie récupérée plus faible. L'énergie stockée dans les batteries peut alors être utilisée pour l'alimentation électrique du film polarisable.

Toutefois le raccordement au circuit d'alimentation électrique de l'aéronef apporte une sécurité supplémentaire, en cas d'absence d'énergie dans les batteries.

Selon un aspect de l'invention, la couche interne comprend en outre au moins un film polarisable supplémentaire destiné à modifier le degré d'opacité du panneau.

La présence de deux films polarisables permet un réglage plus fin du degré d'opacité de la couche interne. Cette disposition permet un meilleur ajustement de l'assombrissement réalisé par la couche interne selon l'éclairage incident.

Selon un aspect de l'invention, la couche translucide est accolée à la couche comprenant le film polarisable.

Selon un aspect de l'invention, le système à panneau translucide comprend en outre une première et une deuxième paroi extrême entourant les couches translucide et interne.

Selon un aspect de l'invention, la première et la deuxième paroi extrême sont en regard des couches translucide et externe. De préférence, la première paroi extrême est accolée à la couche interne et la deuxième paroi extrême est accolée à la couche translucide.

Selon un aspect de l'invention, la première et la deuxième paroi extérieure sont transparentes.

Selon un aspect de l'invention, le système à panneau translucide comprend un circuit électrique pourvu d'une unité de traitement agencée pour commander l'agencement d'alimentation et de réglage.

Selon un aspect de l'invention, le système à panneau translucide comprend des éléments de commandes reliés électriquement à l'unité de traitement et agencés pour la transmission d'une commande de réglage du degré d'opacité du film polarisable par un utilisateur.

Selon un aspect de l'invention, les éléments de commandes sont rapportés sur le circuit électrique. De préférence, les éléments de commande comprennent des touches tactiles agencées pour être contrôlées par l'utilisateur à travers la première paroi extrême rapportée sur le panneau.

Selon un aspect de l'invention, le système à panneau translucide comprend en outre une cassette de réception.

La cassette de réception comprend un premier logement destiné à recevoir au moins une partie de l'élément de transmission ou de stockage de l'énergie lumineuse et un deuxième logement destiné à recevoir au moins une partie de l'agencement d'alimentation et de réglage du degré d'opacité du film polarisable.

De toute façon l'invention sera bien comprise à l'aide de la description qui suit en référence aux dessins schématiques annexés représentant, à titre d'exemple non limitatif, une forme d'exécution de ce système à panneau translucide.
Figure 1 est une vue en perspective d'une cassette de réception d'un hublot, selon un premier mode de réalisation.
Figure 2 est une vue de face de la cassette de réception du hublot, selon le premier mode de réalisation.
Figure 3 est une vue de côté de la cassette de réception du hublot, selon le premier mode de réalisation.
Figure 4 est une vue de face d'un hublot d'habillage intérieur comprenant un film polarisable, selon le premier mode de réalisation.
Figure 5 est une vue en coupe du hublot d'habillage intérieur comprenant un sous-ensemble de contrôle, selon le premier mode de réalisation.
Figure 6 est une vue en perspective du hublot d'habillage intérieur, selon le premier mode de réalisation.
Figure 7 est une vue en perspective du sous-ensemble de contrôle, selon le premier mode de réalisation.
Figure 8 est une vue en coupe d'un panneau du hublot d'habillage intérieur.
Figure 9 est une vue en coupe d'un film polarisable, selon le premier mode de réalisation.
Figure 10 est un vue en coupe d'un collage d'une piste conductrice à un film polarisable, selon le premier mode de réalisation.
Figure 11 est une vue en coupe du hublot d'habillage intérieur comprenant un sous-ensemble de contrôle, selon un second mode de réalisation.
Figure 12 est une vue de face de la cassette de réception du hublot, selon le second mode de réalisation.

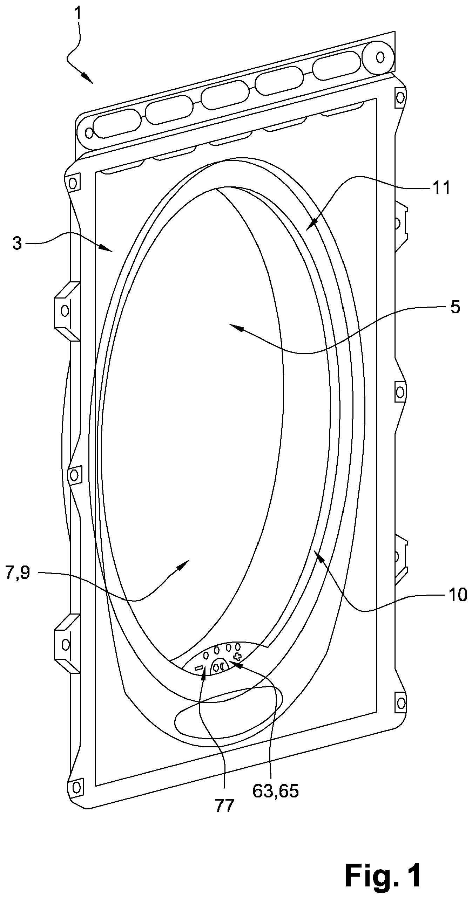

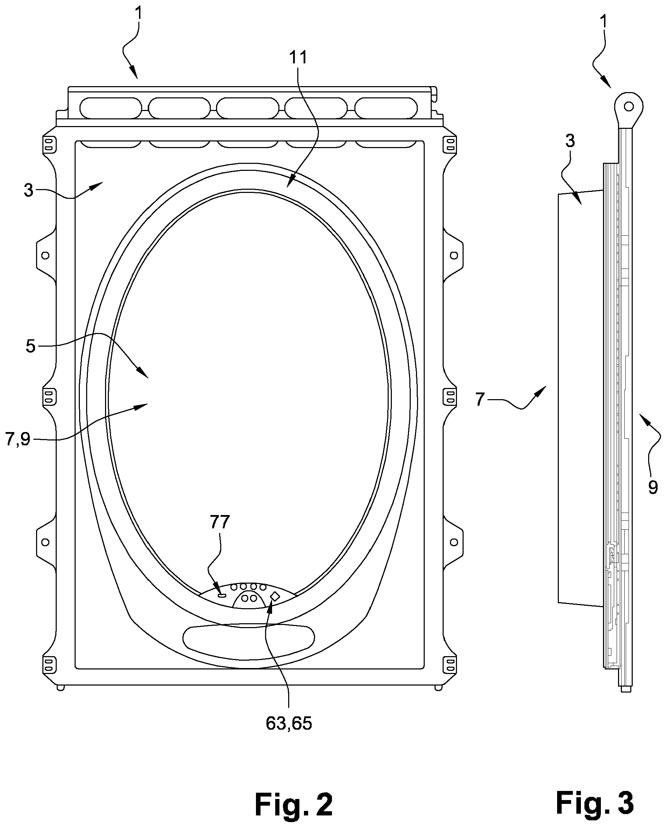

Comme illustré aux figures 1 à 3 et selon le premier mode de réalisation, un système à panneau translucide 1 de hublot polarisable pour aéronef comprend une cassette de réception 3 pour hublot. Une ouverture 5 est ménagée dans la cassette de réception 3. Le système 1 comprend également un hublot structurel extérieur et un hublot d'habillage intérieur 9.

Le hublot structurel extérieur non représenté destiné à être positionné à un emplacement désigné par la référence 7 est situé du côté de la cassette de réception 3 donnant sur l'extérieur de l'aéronef et le hublot d'habillage intérieur 9 est situé du côté de la cassette de réception 3 donnant sur l'intérieur de l'aéronef. Le hublot structurel extérieur est distant du hublot d'habillage intérieur 9.

Le système 1 comprend en outre un anneau de maintien 11 du hublot d'habillage intérieur 9 dans un logement 10 de la cassette de réception 3. L'anneau de maintien 11 présente une forme correspondant au contour du hublot d'habillage intérieur 9.

L'anneau de maintien 11 est pourvu d'un organe de fixation amovible sur la cassette de réception 3. L'anneau de maintien 11 est agencé pour maintenir en position le hublot d'habillage intérieur 9 lorsque l'organe de fixation amovible solidarise l'anneau de maintien 11 à la cassette de réception 3.

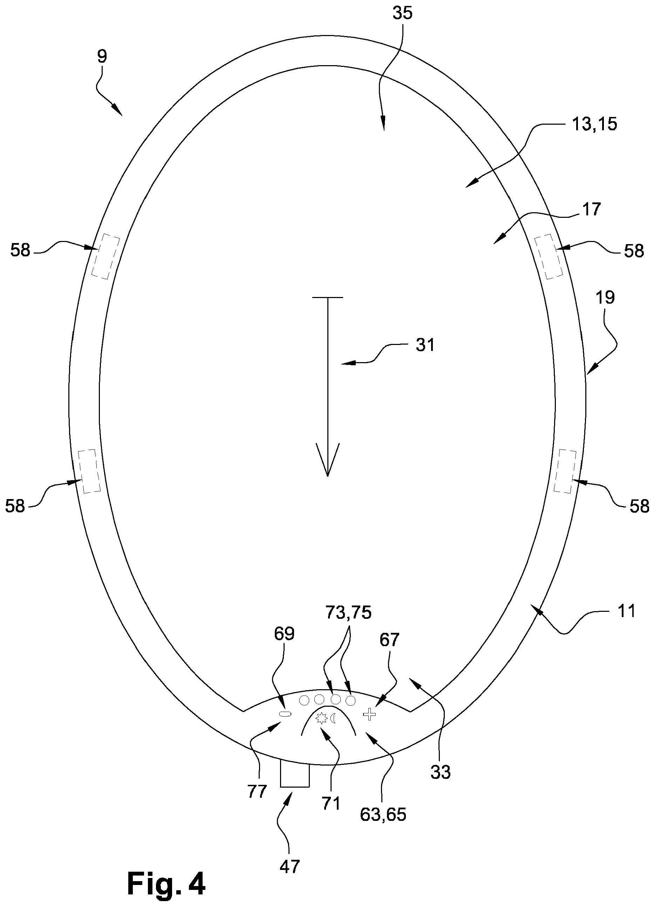

Comme illustré à la figure 4, le hublot d'habillage intérieur 9 comprend un panneau 13. Le panneau 13 est sensiblement plan et présente un contour de forme ovoïde. Le panneau 13 comprend une pluralité de couches et présente une épaisseur résultant de l'empilement desdites couches.

On peut ainsi distinguer une première face extérieure 15 du panneau 13 donnant sur l'intérieur de l'aéronef et une seconde face extérieure du panneau 13 étant en regard du hublot structurel extérieur.

Le panneau 13 comprend une pluralité de couches. Le panneau 3 comprend deux parois 17, 19 extrêmes constituées d'un matériau translucide. Selon le mode de réalisation présenté le matériau translucide est un polycarbonate.

Le panneau 13 comprend une couche interne 21 et une couche translucide 22 solidarisées par une couche de colle 24 transparente.

La couche interne 21 et la couche translucide 22 sont entourées par les parois extrêmes 17, 19. La couche interne 21 est solidaire de la première paroi extrême 17, la solidarisation étant réalisée par une couche de colle 24 transparente. De même, la couche translucide 22 est solidaire de la seconde paroi extrême 19, la solidarisation étant réalisée par une couche de colle 24 transparente.

La couche translucide 22 comprend un écran transparent s'étendant en regard des parois 17, 19. Un dispositif à capteurs d'énergie lumineuse, par exemple de même type que celui décrit dans le document WO 2007085721 A1, est rapporté sur une surface de l'écran transparent, mais d'autres structures de capteurs d'énergie sont possibles.

Le dispositif à capteurs d'énergie lumineuse comprend une pluralité de capteurs solaires photovoltaïques. Des zones photovoltaïques peuvent être définies par ajout des capteurs photovoltaïques sur l'écran transparent.

Selon une variante, il est possible d'augmenter la transparence de la couche translucide 22 par retrait sélectif de matière dans les zones photovoltaïques.

La couche translucide 22 a pour avantage de comprendre une pluralité de capteurs photovoltaïques tout en permettant le passage de la lumière.

Les capteurs photovoltaïques utilisés peuvent être de n'importe quel type tant que leur rendement de conversion est compris entre 4 et 40% et que leur transparence est de préférence comprise entre 60 et 90%.

Les zones photovoltaïques ont de préférence des dimensions et des formes aptes à réduire leur visibilité par rapport à la résolution de l'oeil humain et limiter les phénomènes de flou ainsi que la diffraction qui pourrait perturber la visibilité à travers le hublot.

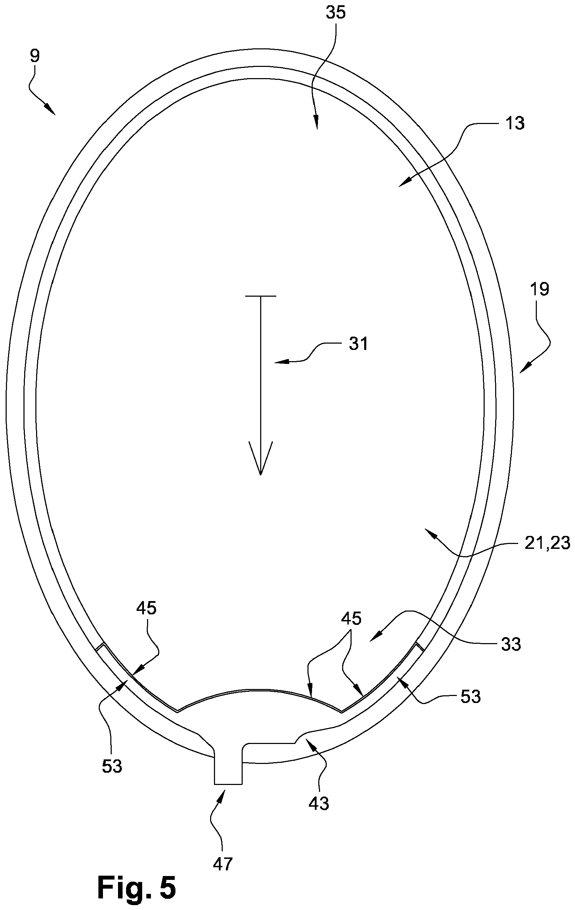

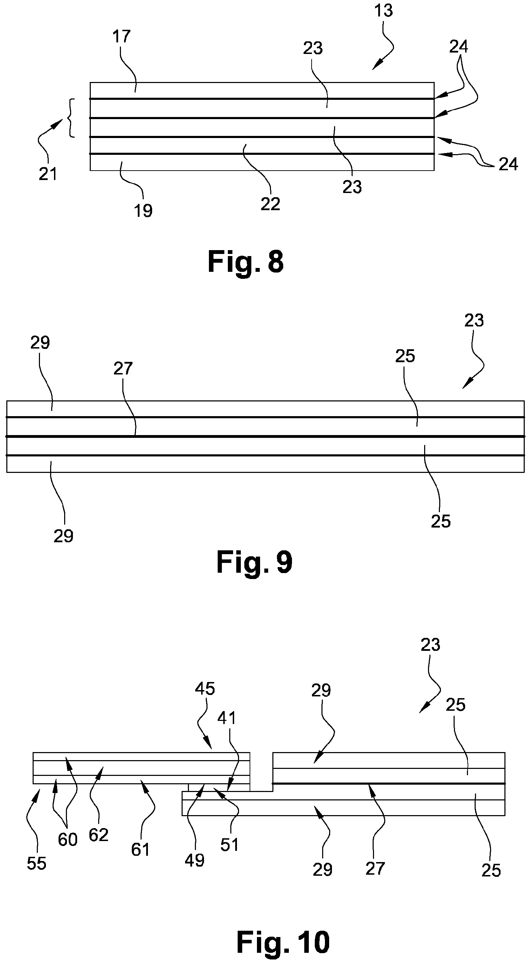

Comme illustré aux figures 5 et 8, la couche interne 21 comprend au moins un film polarisable 23. Selon le premier mode de réalisation, la couche interne 21 comprend deux films polarisables 23 superposés. Une couche de colle 24 transparente assure la solidarisation entre les deux films polarisables 23.

Chaque film polarisable 23 constitue une épaisseur de la couche interne 21 et s'étend en regard de faces extérieures 15 du hublot d'habillage intérieur 9.

De plus les films polarisables 23 sont agencés pour que leurs degrés d'opacité respectifs soient modifiables indépendamment.

Comme illustré à la figure 9, chaque film polarisable 23 comprend deux couches conductrices 25 transparentes entre lesquelles se trouve une couche d'un matériau polarisable 27. Les couches conductrices 25 s'étendent également en regard des faces extérieures 15 du hublot d'habillage intérieur 9.

Selon le premier mode de réalisation, la couche de matériau polarisable 27 est de type « suspended particule device ». La couche de matériau polarisable 27 est agencée pour changer de degré d'opacité en fonction de l'alimentation électrique imposée audit matériau par les deux couches conductrices 25 l'entourant. L'opacité est obtenue par une polarisation dudit matériau, la polarisation variant en fonction de l'alimentation électrique soumise aux deux couches conductrices 25.

Les couches conductrices 25 sont entourées par des couches isolantes 29 transparentes. Selon le premier mode de réalisation, les couches isolantes 29 transparentes sont en polyamide.

Comme illustré aux figures 1 à 6, la forme ovoïde du hublot d'habillage intérieur 9 présente une direction principale d'extension 31. On définit une première 33 et une deuxième extrémité 35 du hublot d'habillage intérieur 9 selon la direction principale d'extension 31.

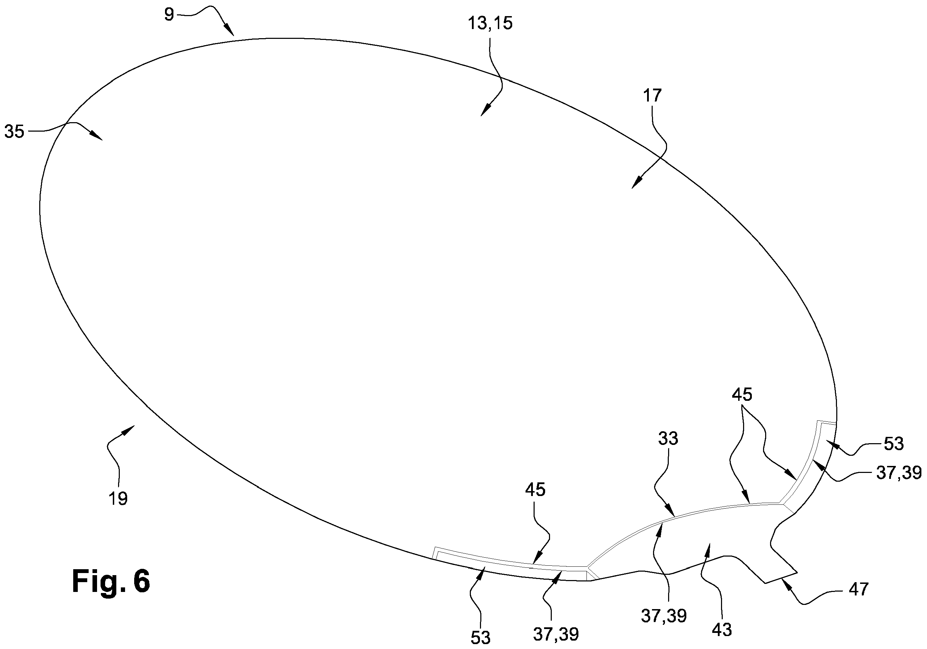

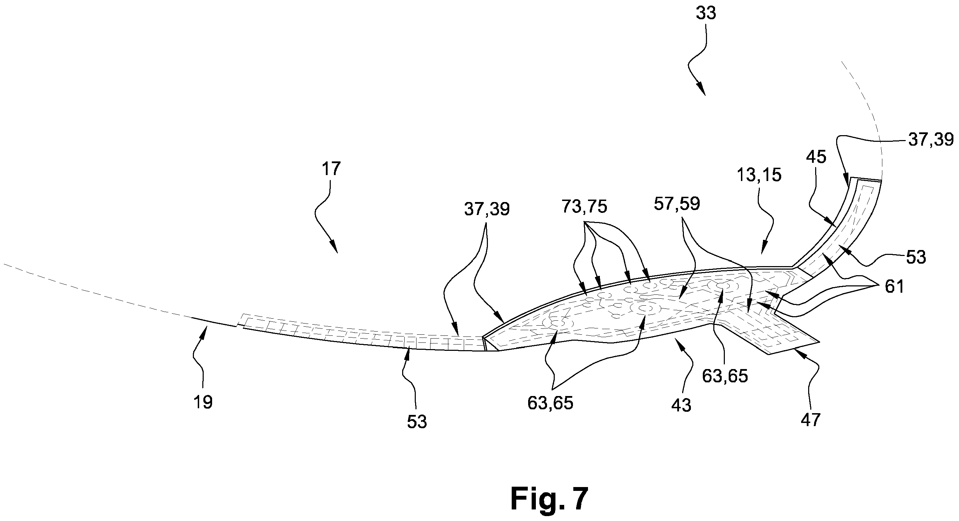

A la première extrémité 33 du hublot d'habillage intérieur 9, la couche interne 21 et la couche translucide 22 comprennent une station de connexion 37, comme illustré aux figures 6 et 7. La station de connexion 37 comprend un emplacement de connexion 39 ménagé dans l'épaisseur des couches interne 21 et translucide 22.

La station de connexion 37 comprend des zones de contact 41 destinées pour celles de la couche interne 21 à l'alimentation électrique des couches conductrices 25 et pour celles de la couche translucide 22 à la récupération d'énergie électrique en provenance du dispositif à capteurs d'énergie. Chaque couche conductrice 25 comprend une zone de contact 41.

Comme illustré aux figures 6 et 7, le hublot d'habillage intérieur 9 comprend en outre un sous-ensemble de contrôle 43. Le sous-ensemble de contrôle 43 est rapporté à la première extrémité 33 du hublot d'habillage intérieur 9.

L'anneau de maintien 11 est en regard du sous-ensemble de contrôle 43 de telle sorte que l'anneau de maintien 11 réalise un capotage du sous-ensemble de contrôle 43 par rapport à l'intérieur de l'aéronef.

Le sous-ensemble de contrôle 43 comprend un premier organe de liaison électrique 45 et un deuxième organe de liaison électrique 47. Le premier 45 et le deuxième 47 organe de liaison sont réalisés en matériau flexible.

Le sous-ensemble de contrôle 43 se situe entre les parois 17, 19, à l'exception du deuxième organe de liaison électrique 47 qui s'étend vers l'extérieur du hublot d'habillage intérieur 9.

Le premier organe de liaison électrique 45 présente une forme extérieure complémentaire à l'emplacement de connexion 39. Le premier organe de liaison électrique 45 est solidarisé à la station d'accueil par collage.

Comme illustré à la figure 10, le premier organe de connexion électrique 45 comprend des bornes de connexion 49 aux zones de contact 41 de la station de connexion 37. Le collage 51 permet à la fois de solidariser le sous-ensemble de contrôle 43 à la station de connexion 37 et à relier électriquement les zones de contact 41 aux bornes de connexion 49. La figure 10 illustre un collage 51 entre une couche conductrice 25 et une borne de connexion 49 du premier organe de connexion électrique 45.

Comme illustré aux figures 6 et 7, le premier organe de connexion électrique 45 comprend deux bandes latérales 53.

Le second organe de connexion électrique 47 s'étend en dehors de la zone en regard des parois 17, 19 contrairement au reste du sous-ensemble de contrôle 43, comme illustré à la figure 7. Le second organe de connexion 47 s'étend sensiblement parallèlement aux faces extérieures 15 du panneau 13. Le second organe de connexion 47 comprend un élément de connexion à un circuit d'alimentation électrique.

Comme illustré à la figure 7, le sous-ensemble de contrôle 43 comprend un circuit électrique 55 flexible. Le circuit électrique 55 comprend en outre une unité de traitement 57. Selon le premier mode de réalisation, l'unité de traitement 57 est un microprocesseur. Le microprocesseur est ménagé dans le circuit électrique 55 flexible.

Le sous-ensemble de contrôle 43 comprend un élément de transmission et de stockage de l'énergie pourvu de batteries 58. Les batteries 58 sont disposées dans des logements de l'anneau de maintien 11, l'anneau de maintien 11 réalisant un capotage des batteries 58 par rapport à l'intérieur de l'aéronef comme illustré aux figures 4, 5 et 11.

L'élément de transmission et de stockage est agencé pour transmettre l'énergie électrique récupérée par le dispositif à capteur d'énergie lumineuse aux batteries 58.

Le sous-ensemble de contrôle 43 comprend un agencement d'alimentation électrique et de réglage du degré d'opacité du film polarisable 59 appliquant une tension aux bornes du premier organe de connexion, le dispositif étant ménagé dans le circuit électrique flexible. Le dispositif d'application de tension est relié à une alimentation électrique externe par le second organe de connexion.

Le microprocesseur et l'agencement d'alimentation et de réglage 59 sont connectés, le microprocesseur étant agencé pour piloter l'agencement d'alimentation et de réglage 59 de manière à ce que l'agencement d'alimentation et de réglage 59 fasse varier l'alimentation électrique aux bornes 49 du premier organe de liaison électrique 45. Comme illustré à la figure 10, l'agencement d'alimentation et de réglage 59 est relié électriquement au premier organe de liaison 45 par des pistes conductrices 61, les pistes conductrices 61 étant disposées dans une portion conductrice 60 du circuit électrique 55 flexible. Le circuit électrique 55 comprend également une portion isolante 62.

Le sous-ensemble de contrôle 43 est agencé pour alimenter en énergie électrique les couches conductrices 25 par l'intermédiaire de l'agencement d'alimentation et de réglage 59 avec l'énergie électrique provenant des batteries.

Le sous-ensemble de contrôle 43 comprend également des éléments de commande 63 rapportés sur le circuit électrique 55 flexible. Les éléments de commandes 63 sont reliés au microprocesseur de manière à permettre à un utilisateur de régler l'alimentation électrique des couches conductrices 25.

Les éléments de commandes 63 comprennent des touches tactiles 65 agencées pour être contrôlées par l'utilisateur à travers la première paroi 17, les touches tactiles 65 étant activées par contact sur une zone de la première face extérieure 15 en regard du bouton tactile 65. Les touches tactiles 65 comprennent des capteurs inductifs et/ou capacitifs.

Les éléments de commande 63 comprennent une première touche tactile 67 pour l'augmentation du degré d'opacité du hublot d'habillage intérieur 9, une deuxième touche tactile 69 pour la diminution dudit degré d'opacité et une troisième touche tactile 71 permettant à chaque appui d'alterner entre une opacité totale et la transparence du hublot d'habillage intérieur 9.

Le sous-ensemble de contrôle 43 comprend également des éléments de signalisation 73 rapportés sur le circuit électrique 55 flexible. Les éléments de signalisation 73 comprennent des diodes électroluminescentes 75 visibles à travers la première paroi 17, comme illustré à la figure 7.

Les diodes électroluminescentes 75 sont reliées électriquement au microprocesseur. Le microprocesseur est agencé pour piloter l'éclairage des diodes électroluminescentes 75 en fonction du degré d'opacité du hublot. Le nombre de diodes électroluminescentes 75 allumées varie en fonction du degré d'opacité du hublot d'habillage intérieur 9, plus le hublot d'habillage intérieur 9 est opaque plus le nombre de diodes électroluminescentes 75 allumées est important.

Le sous-ensemble de contrôle 43 comprend également une sérigraphie 77 disposée sur le circuit électrique 55 flexible, comme illustré à la figure 7. La sérigraphie 77 comprend des indications destinées à l'utilisateur pour spécifier l'emplacement des touches tactiles 65 et leur rôle. Des ouvertures sont ménagées dans la sérigraphie pour laisser les diodes électroluminescentes 75 apparentes.

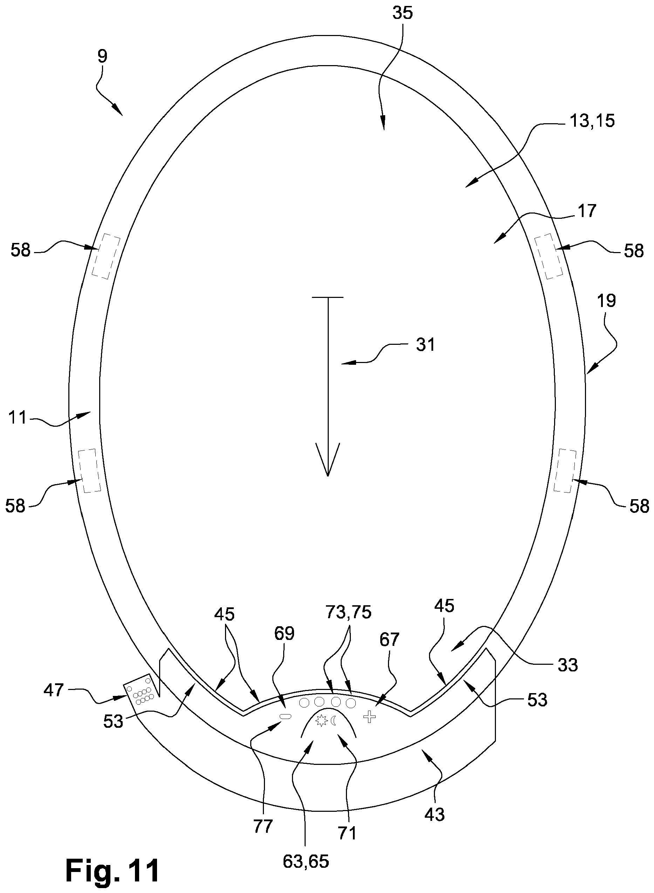

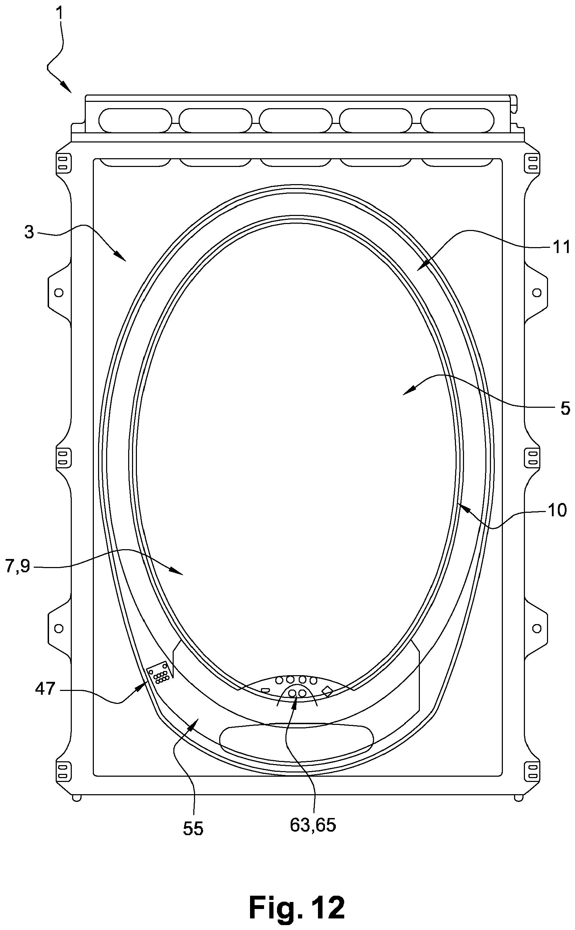

Comme illustré aux la figures 11 et 12, selon un second mode de réalisation, le circuit électrique 55 présente une portion en dehors de la zone en regard des parois 17, 19. Le circuit électronique 55 est partiellement rigide et partiellement flexible.

La portion rigide du circuit électronique comprend le deuxième organe de liaison électrique 47. La portion rigide du circuit électronique 55 comprend également l'unité de traitement 57 et l'agencement d'alimentation et de réglage 59 pour la transmission de la puissance électrique aux couches conductrices 25.

La portion flexible comprend le premier organe de liaison électrique 45, les éléments de commande 63 et les éléments de signalisation 73.

Les pistes conductrices 61 sont comprises à la fois dans la portion rigide et dans la portion flexible.

Seules les caractéristiques du second mode de réalisation différant des éléments du premier mode de réalisation sont décrites ci-dessus. Les caractéristiques identiques ne sont pas reprises.

Le hublot d'habillage intérieur 9 décrit ci-avant présente des avantages de par sa conception. Le sous-ensemble de contrôle 43 est rapporté sur le panneau 13 du hublot d'habillage intérieur 9. L'insertion du hublot d'habillage intérieur 9 dans le logement 10 de la cassette de réception 3 s'en trouve facilitée.

L'installation du hublot d'habillage intérieur 9 dans la cassette de réception 3 est rapide et simple : il suffit de positionner le hublot d'habillage intérieur 9 dans l'emplacement dédié de la cassette de réception 3, de raccorder le second organe de liaison électrique 47 à une source d'alimentation électrique et de solidariser le hublot d'habillage intérieur 9 avec l'anneau de maintien 11.

Pour les opérations de maintenance, notamment en cas de dysfonctionnement du réglage de l'opacité, le remplacement du hublot d'habillage intérieur 9 défectueux par un autre hublot d'habillage intérieur 9 s'avère également simple grâce à l'intégration du sous-ensemble de contrôle 43 dans le hublot d'habillage intérieur 9.

Le hublot d'habillage intérieur 9 est également fiable car le sous-ensemble de contrôle 43 est protégé de l'environnement extérieur par l'anneau de maintien 11.

De plus le raccordement électrique par collage du premier organe de liaison électrique 45 à la station de connexion 41 est résistant. Le risque de rupture de la connexion électrique est faible.

Le film polarisable 23 étant opaque en l'absence d'alimentation électrique, l'utilisation de batteries 58 présente un avantage certain. En période de forte luminosité, l'alimentation électrique nécessaire au film polarisable est faible tandis que le dispositif à capteurs d'énergie récupère une énergie importante. Ainsi il est possible de charger les batteries 58.

A l'inverse, en période de faible luminosité, les besoins en alimentation électrique sont plus importants et l'énergie récupérée plus faible. L'énergie stockée dans les batteries peut alors être utilisée pour l'alimentation électrique.

Cette disposition permet un fonctionnement autonome du système à panneau 1, c'est-à-dire sans apport d'énergie en provenance du circuit d'alimentation électrique. Toutefois le raccordement au circuit d'alimentation électrique de l'aéronef apporte une sécurité supplémentaire, en cas d'absence d'énergie dans les batteries.

Comme il va de soi, l'invention ne se limite pas à la seule forme d'exécution de ce système, décrit ci-dessus à titre d'exemple, elle en embrasse au contraire toutes les variantes de réalisation.

A ce propos, le dispositif à capteurs d'énergie lumineuse peut être pourvu de différents types de capteurs de récupération d'énergie lumineuse, comme par exemple des capteurs solaires thermiques en lieu et place des capteurs photovoltaïques.

## Revendications

1. Système à panneau translucide (1) comprenant :
- un panneau (13) comprenant une couche translucide (22) pourvue d'un écran transparent sur lequel est rapporté un dispositif à capteurs d'énergie lumineuse d'une source de lumière, de façon à permettre la vision à travers la couche translucide (22), le panneau (13) comprenant en outre une couche interne (21) pourvue d'un film polarisable (23) destiné à modifier le degré d'opacité du panneau (13), la couche translucide (22) étant en regard de la couche interne (21),
- un élément de transmission et/ou de stockage d'énergie en provenance du dispositif à capteurs,
- un agencement d'alimentation électrique et de réglage du degré d'opacité (59) du film polarisable (23), l'agencement d'alimentation et de réglage (59) étant au moins partiellement alimenté par l'élément de transmission et/ou de stockage de l'énergie lumineuse.

2. Système à panneau translucide (1) selon la revendication 1, dans lequel le dispositif à capteurs d'énergie lumineuse comprend des capteurs solaires thermiques et/ou photovoltaïques.

3. Système à panneau translucide (1) selon la revendication précédente, dans lequel les capteurs solaires photovoltaïques sont rapportés sur l'écran transparent et sont agencés pour que la couche transparente (22) présente une transparence supérieure à 60%.

4. Système à panneau translucide (1) selon l'une des revendications précédentes, dans lequel l'élément de transmission et/ou de stockage de l'énergie lumineuse comprend une batterie (58) apte à stocker l'énergie en provenance du dispositif à capteurs.

5. Système à panneau translucide (1) selon l'une des revendications précédentes, dans lequel le film polarisable (23) est opaque en absence d'alimentation électrique.

6. Système à panneau translucide (1) selon l'une des revendications précédentes, dans lequel l'agencement d'alimentation et de réglage (59) est alimenté par l'élément de transmission et/ou de stockage d'énergie.

7. Système à panneau translucide (1) selon l'une des revendications précédentes, dans lequel la couche interne (21) comprend en outre au moins un film polarisable supplémentaire destiné à modifier le degré d'opacité du panneau.

8. Système à panneau translucide (1) selon l'une des revendications précédentes, dans lequel la couche translucide est accolée à la couche comprenant le film polarisable.

9. Système à panneau translucide (1) selon l'une des revendications précédentes, comprenant en outre une première (17) et une deuxième (19) paroi extrême entourant les couches translucide (22) et interne (21).

10. Système à panneau translucide (1) selon l'une des revendications précédentes, comprenant un circuit électrique (55) pourvu d'une unité de traitement (57) agencée pour commander l'agencement d'alimentation et de réglage (59).

11. Système à panneau translucide (1) selon la revendication précédente, comprenant des éléments de commandes (63) reliés électriquement à l'unité de traitement (57) et agencés pour la transmission d'une commande de réglage du degré d'opacité du film polarisable (23) par un utilisateur.

12. Système à panneau translucide (1) selon l'une des revendications précédentes comprenant en outre une cassette de réception (3),
la cassette de réception (3) comprenant un premier logement destiné à recevoir au moins une partie de l'élément de transmission ou de stockage de l'énergie lumineuse et un deuxième logement destiné à recevoir au moins une partie de l'agencement d'alimentation et de réglage du degré d'opacité (59) du film polarisable (23).

## Patentansprüche

1. System mit lichtdurchlässiger Platte (1), umfassend:
- eine Platte (13), umfassend eine lichtdurchlässige Schicht (22), die mit einem transparenten Schirm versehen ist, auf den eine Vorrichtung mit Kollektoren von Lichtenergie einer Lichtquelle aufgesetzt ist, um die Sicht durch die lichtdurchlässige Schicht (22) zu ermöglichen, wobei die Platte (13) außerdem eine innere Schicht (21) umfasst, die mit einem polarisierbaren Film (23) versehen ist, der ausgelegt ist, um den Grad der Undurchsichtigkeit der Platte (13) zu modifizieren, wobei sich die lichtdurchlässige Schicht (22) gegenüber der inneren Schicht (21) befindet,
- ein Element zur Übertragung und/oder Speicherung von Energie, die von der Vorrichtung mit Kollektoren stammt,
- eine Anordnung zur elektrischen Versorgung und zur Einstellung des Grades der Undurchsichtigkeit (59) des polarisierbaren Films (23), wobei die Anordnung zur Versorgung und zur Einstellung (59) mindestens teilweise durch das Element zur Übertragung und/oder Speicherung der Lichtenergie versorgt wird.

2. System mit lichtdurchlässiger Platte (1) nach Anspruch 1, wobei die Vorrichtung mit Kollektoren von Lichtenergie thermische und/oder fotovoltaische Sonnenkollektoren umfasst.

3. System mit lichtdurchlässiger Platte (1) nach dem vorhergehenden Anspruch, wobei die fotovoltaischen Sonnenkollektoren auf den transparenten Schirm aufgesetzt sind und angeordnet sind, damit die transparente Schicht (22) eine Transparenz von mehr als 60 % aufweist.

4. System mit lichtdurchlässiger Platte (1) nach einem der vorhergehenden Ansprüche, wobei das Element zur Übertragung und/oder Speicherung der Lichtenergie eine Batterie (58) umfasst, die geeignet ist, um Energie zu speichern, die aus der Vorrichtung mit Kollektoren stammt.

5. System mit lichtdurchlässiger Platte (1) nach einem der vorhergehenden Ansprüche, wobei der polarisierbare Film (23) in Abwesenheit von elektrischer Versorgung undurchsichtig ist.

6. System mit lichtdurchlässiger Platte (1) nach einem der vorhergehenden Ansprüche, wobei die Anordnung zur Versorgung und zur Einstellung (59) durch das Element zur Übertragung und/oder Speicherung von Energie versorgt wird.

7. System mit lichtdurchlässiger Platte (1) nach einem der vorhergehenden Ansprüche, wobei die innere Schicht (21) außerdem mindestens einen zusätzlichen polarisierbaren Film umfasst, der ausgelegt ist, um den Grad der Undurchsichtigkeit der Platte zu modifizieren.

8. System mit lichtdurchlässiger Platte (1) nach einem der vorhergehenden Ansprüche, wobei die lichtdurchlässige Schicht an die Schicht geklebt ist, die den polarisierbaren Film umfasst.

9. System mit lichtdurchlässiger Platte (1) nach einem der vorhergehenden Ansprüche, umfassend außerdem eine erste (17) und eine zweite (19) Endwand, die die lichtdurchlässige (22) und innere (21) Schicht umgeben.

10. System mit lichtdurchlässiger Platte (1) nach einem der vorhergehenden Ansprüche, umfassend einen Stromkreis (55), der mit einer Verarbeitungseinheit (57) versehen ist, die angeordnet ist, um die Anordnung zur Versorgung und zur Einstellung (59) zu steuern.

11. System mit lichtdurchlässiger Platte (1) nach dem vorhergehenden Anspruch, umfassend Steuerelemente (63), die elektrisch mit der Verarbeitungseinheit (57) verbunden und angeordnet sind für die Übertragung einer Steuerung zur Einstellung des Grades der Undurchsichtigkeit des polarisierbaren Films (23) durch einen Benutzer.

12. System mit lichtdurchlässiger Platte (1) nach einem der vorhergehenden Ansprüche, umfassend außerdem eine Aufnahmekassette (3),
wobei die Aufnahmekassette (3) ein erstes Gehäuse umfasst, das ausgelegt ist, um mindestens einen Teil des Elements zur Übertragung oder Speicherung von Lichtenergie aufzunehmen, und ein zweites Gehäuse, das ausgelegt ist, um mindestens einen Teil der Anordnung zur Versorgung und zur Einrichtung des Grades der Undurchsichtigkeit (59) des polarisierbaren Films (23) aufzunehmen.

## Claims

1. A translucent panel system (1) comprising:
- a panel (13) comprising a translucent layer (22) provided with a transparent screen onto which is added a collector device for collecting the luminous energy of a light source, so as to allow vision through the translucent layer (22), the panel (13) further comprising an inner layer (21) provided with a polarizable film (23) intended to modify the degree of opacity of the panel (13), the translucent layer (22) facing the inner layer (21),
- an element for transmitting and/or storing energy coming from the collector device,
- an arrangement (59) for power supply and adjustment of the degree of opacity of the polarizable film (23), the power supply and adjustment arrangement (59) being at least partially powered by the element for transmitting and/or storing the luminous energy.

2. The translucent panel system (1) according to claim 1, wherein the luminous energy collector device comprises solar, thermal and/or photovoltaic collectors.

3. The translucent panel system (1) according to the preceding claim, wherein the photovoltaic solar collectors are added onto the transparent screen and are arranged so that the transparent layer (22) has a transparency higher than 60%.

4. The translucent panel system (1) according to any of the preceding claims, wherein the element for transmitting and/or storing the luminous energy comprises a battery (58) capable of storing the energy coming from the collector device.

5. The translucent panel system (1) according to any of the preceding claims, wherein the polarizable film (23) is opaque in the absence of power supply.

6. The translucent panel system (1) according to any of the preceding claims, wherein the power supply and adjustment arrangement (59) is powered by the element for transmitting and/or storing energy.

7. The translucent panel system (1) according to any of the preceding claims, wherein the inner layer (21) further comprises at least one additional polarizable film intended to modify the degree of opacity of the panel.

8. The translucent panel system (1) according to any of the preceding claims, wherein the translucent layer is contiguous to the layer comprising the polarizable film.

9. The translucent panel system (1) according to any of the preceding claims, further comprising a first (17) and a second (19) end wall surrounding the translucent (22) and inner (21) layers.

10. The translucent panel system (1) according to any of the preceding claims, comprising an electric circuit (55) provided with a processing unit (57) arranged to control the power supply and adjustment arrangement (59).

11. The translucent panel system (1) according to the preceding claim, comprising control elements (63) electrically connected to the processing unit (57) and arranged for the transmission of an adjustment control of the degree of opacity of the polarizable film (23) by a user.

12. The translucent panel system (1) according to any of the preceding claims further comprising a receiving cassette (3),
the receiving cassette (3) comprising a first housing intended to receive at least part of the element for transmitting or storing the luminous energy and a second housing intended to receive at least part of the power supply and adjustment arrangement (59) of the degree of opacity of the polarizable film (23).
